(19) Europäisches Patentamt / European Patent Office / Office européen des brevets

(11) **EP 4 697 404 A1**

(12) **EUROPEAN PATENT APPLICATION**
published in accordance with Art. 153(4) EPC

(43) Date of publication:
**18.02.2026 Bulletin 2026/08**

(21) Application number: **24880036.9**

(22) Date of filing: **11.10.2024**

(51) International Patent Classification (IPC):
$H01M\ 4/134^{(2010.01)}$     $H01M\ 10/42^{(2006.01)}$
$H01M\ 4/38^{(2006.01)}$     $H01M\ 4/48^{(2010.01)}$
$H01M\ 4/587^{(2010.01)}$     $H01M\ 10/0525^{(2010.01)}$
$H01M\ 4/02^{(2006.01)}$

(52) Cooperative Patent Classification (CPC):
H01M 4/02; H01M 4/134; H01M 4/38; H01M 4/48;
H01M 4/587; H01M 10/0525; H01M 10/42;
Y02E 60/10

(86) International application number:
**PCT/KR2024/015362**

(87) International publication number:
**WO 2025/084699 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.10.2023 KR 20230140890**

(71) Applicant: **LG Energy Solution, Ltd.
Seoul 07335 (KR)**

(72) Inventors:
• **LEE, Sang Hyun**
  **Daejeon 34122 (KR)**

• **KIM, Donghyuk**
  **Daejeon 34122 (KR)**
• **LEE, Su Min**
  **Daejeon 34122 (KR)**
• **LEE, Yong Ju**
  **Daejeon 34122 (KR)**
• **HYUN, Jaeik**
  **Daejeon 34122 (KR)**

(74) Representative: **Hoffmann Eitle
Patent- und Rechtsanwälte PartmbB
Arabellastraße 30
81925 München (DE)**

(54) **ANODE, AND LITHIUM SECONDARY BATTERY AND BATTERY PACK COMPRISING SAME**

(57) The present specification relates to an anode (100) and a lithium secondary battery and a battery pack comprising same, the anode comprising a flame retardant polymer layer (3) provided on an anode active material layer (2), wherein the flame retardant polymer layer includes a flame retardant that is converted into char (later forming an oxygen-blocking layer (4)) during combustion at a temperature of 150 °C or higher. The anode according to the embodiment can ensure desired battery characteristics under normal conditions while preventing thermal runaway under specific temperature conditions.

[Figure 6]

400

300

EP 4 697 404 A1

**Description**

[Technical Field]

The present application relates to a negative electrode, a lithium secondary battery including the same, and a battery pack.

This application claims priority to and the benefit of Korean Patent Application No. 10-2023-0140890 filed in the Korean Intellectual Property Office on October 20, 2023.

[Background Art]

A secondary battery is a battery that can be recharged and reused even after being discharged. The secondary battery can be used as an energy source for small devices, such as mobile phones, tablet PCs, and vacuum cleaners, as well as an energy source for medium and large devices, such as an energy storage system (ESS) for personal mobilities, automobiles, and smart grids.

In order to be utilized in such a wide range of applications, secondary batteries are required to have high performance. As a result of extensive research and development, lithium secondary batteries, which provide high energy density, ease of processing, and applicability in various electronic devices, have gained significant attention.

However, lithium secondary batteries are not only vulnerable to external impacts but also prone to internal deterioration, which can result in frequent ignition. These problems can cause significant damage by causing heat transfer among multiple battery cells, resulting in thermal runaway in assembly units such as battery modules or battery packs connected in series and/or parallel.

Specifically, when the internal temperature of a lithium secondary battery exceeds a certain temperature, the pressure inside the cell may rise as an electrolyte vaporizes, potentially causing leakage of the electrolyte from the cell or damage to the separator. When flammable gaseous substances are ignited or the separator is damaged due to the vaporization of the electrolyte, an internal short circuit may be caused, leading to heating of adjacent cells. This may result in undesirable continuous or chain-like exothermic reactions, which progress to ignition, causing the fire to spread throughout the battery pack. However, lithium ions have high reactivity to water, even attempting to extinguish the fire with water may cause the fire to spread further.

To solve the above problems, research is required on materials that can block or suppress, at an early stage, the occurrence of undesirable continuous or chain-like exothermic reactions in lithium-ion battery units that can lead to ignition.

[Detailed Description of the Invention]

[Technical Problem]

The present inventors have developed a flame-retardant polymer layer containing a flame retardant that delays ignition at a specific temperature or higher, regarding an electrode material for a lithium secondary battery, and have applied this flame-retardant polymer layer to a surface of a negative electrode active material layer to complete a negative electrode having features of blocking heat transfer and thermal runaway between cells while maintaining intended battery characteristics even when a small amount of the flame retardant is included.

Specifically, the present specification provides a negative electrode that includes, on a negative electrode active material layer, the flame-retardant polymer layer including a flame retardant that is converted into char when combusted at a temperature of 150°C or higher, a lithium secondary battery including the same, and a battery pack.

[Technical Solution]

An exemplary embodiment of the present specification provides a negative electrode including: a negative electrode current collector; a negative electrode active material layer provided on the negative electrode current collector; and a flame-retardant polymer layer provided on the negative electrode active material layer, in which the flame-retardant polymer layer includes a flame retardant that is converted to char when combusted at a temperature of 150°C or higher.

Another exemplary embodiment of the present specification provides a lithium secondary battery including the above-described negative electrode; a positive electrode; a separator interposed between the positive electrode and the negative electrode; and an electrolyte.

Still another exemplary embodiment of the present specification provides a battery pack including the above-described lithium secondary battery as a unit cell.

[Advantageous Effects]

According to an exemplary embodiment of the present invention, the negative electrode maintains intended battery characteristics such as long life and low cell resistance under normal conditions, and under specific conditions (when combusted at a temperature of 150°C or higher), blocks the inflow of oxygen from the outside and prevents a reaction with the positive electrode by conversion of the flame retardant into char, thereby preventing additional thermal runaway, delaying the time to thermal runaway, and suppressing gas generation caused by ignition.

Since the negative electrode according to an exemplary embodiment of the present invention includes a flame-retardant polymer layer on the negative electrode active material layer, it provides the effect of preventing deterioration of the intended battery characteristics by including a flame retardant in an amount necessary to prevent thermal runaway.

[Brief Description of Drawings]

FIG. 1 is a schematic view of a negative electrode according to the related art.

FIGS. 2 and 3 are schematic views of negative electrodes according to exemplary embodiments of the present invention.

FIG. 4 is a schematic view of a flame-retardant polymer layer according to an exemplary embodiment of the present invention.

FIG. 5 is a schematic view of a battery pack including the lithium secondary battery according to an exemplary embodiment of the present invention.

FIG. 6 is a schematic view of a moving means including the battery pack according to an exemplary embodiment of the present invention.

| 1: | negative electrode current collector |
| 2: | negative electrode active material layer |
| 3: | flame-retardant polymer layer |
| 4: | oxygen barrier layer |
| 5: | oxygen |
| 6: | pore |
| 7: | pore blockage |
| 100: | negative Electrode |
| 200: | lithium secondary battery |
| 201: | housing |
| 300: | battery pack |
| 400: | moving means |

[Best Mode]

Before describing the present invention, some terms are first defined.

In the present specification, 'p to q' may refer to a range of 'p or more and q or less'.

In the present specification, when a part is described as 'including' or 'having' a certain component, unless otherwise specified, it may mean that the part may further include other components rather than excluding other components.

In the present specification, singular expressions include plural expressions, unless otherwise specified.

Unless otherwise defined, all terms used herein, including technical and scientific terms, have the same meanings as commonly understood by one skilled in the art to which the present invention pertains. Terms, such as those defined in commonly used dictionaries, should be interpreted as having a meaning consistent with their meaning in the context of the relevant art and should not be interpreted in an idealized or overly formal sense unless explicitly so defined in the present application.

Hereinafter, exemplary embodiments of the present invention will be described in detail with reference to the drawings so that one skilled in the art can readily implement the present invention. However, the present invention may be implemented in various different forms, and is not limited to the following descriptions.

**<Negative Electrode>**

An exemplary embodiment of the present specification provides a negative electrode including a flame-retardant polymer layer on a negative electrode active material layer provided on a negative electrode current collector, in which the flame-retardant polymer layer includes a flame retardant that is converted to char when combusted at a temperature of 150°C or higher.

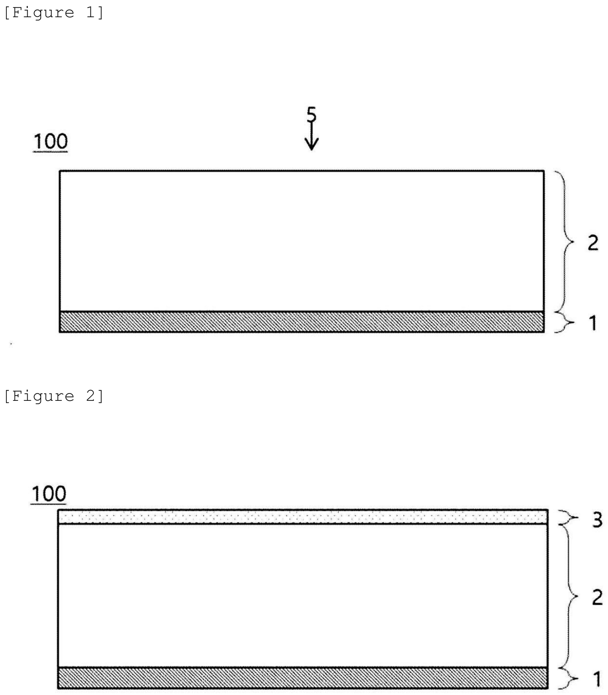

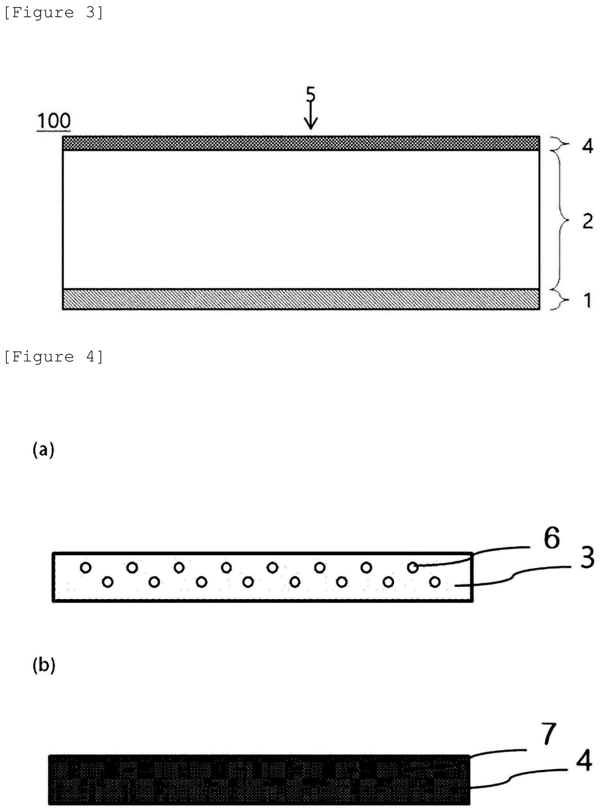

Referring to FIGS. 2 and 3, a negative electrode 100 according to an exemplary embodiment of the present invention includes a negative electrode active material layer 2 provided on a negative electrode current collector 1, and a flame-retardant polymer layer 3 provided on the negative electrode active material layer 2, and the flame-retardant polymer layer 3 is converted to char when combusted at a temperature of 150°C or higher to form an oxygen barrier layer 4, which forms a film, thereby blocking oxygen 5 flowing in from the outside. This prevents continuous or chain-like exothermic reactions caused by oxygen, thereby preventing thermal runaway due to heat generation. On the other hand, FIG. 1 shows a negative electrode of the related art, in which a negative electrode active material layer 2 is provided on a negative electrode current collector 1, and it is difficult to block oxygen 5 flowing in from the outside.

The exothermic reaction occurs when the cell temperature rises under abnormal conditions such as physical impact from outside the cell or cell aging, thereby causing internal reactions between cell components such as a positive electrode, a negative electrode, a solid electrolyte interface (SEI) layer, and an electrolyte solution, resulting in self-heat generation. Furthermore, when the self-heat generation intensifies, the cell may ignite, resulting in thermal runaway. In particular, the negative electrode is highly reactive in a lithium-charged state, and when it comes into contact with the positive electrode, spontaneous reactions intensify the internal heat generation of the cell, which in turn causes problems such as cell ignition and thermal runaway.

According to the present specification, the negative electrode uses a specific flame retardant. Therefore, when ignition occurs due to initial self-heat generation, the flame-retardant polymer layer is converted to char at a specific temperature (150°C) or higher, thereby blocking pores. As a result, it is possible to prevent direct contact between the positive and negative electrode active material layers and efficiently block continuous heat transfer inside and outside the negative electrode, as well as oxygen supply, thereby effectively weakening the level of ignition.

Referring to FIG. 4(a), when no ignition occurs, the flame-retardant polymer layer 3 has a porous structure with pores 6. However, referring to FIG. 4(b), when ignition occurs, the flame retardant of the flame-retardant polymer layer is converted to char at a specific temperature (150°C) or higher to form the oxygen barrier layer 4, causing pore blockage 7, which in turn can interrupt the chain reactions of ignition.

In the present specification, the negative electrode current collector is not particularly limited as long as it has conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used.

In the present specification, the negative electrode current collector may typically have a thickness of 1 μm to 100 μm, and fine irregularities may be formed on a surface of the negative electrode current collector to increase the adhesive strength of the negative electrode active material. In addition, the negative electrode current collector may be used in various forms, such as a film, a sheet, a foil, a net, a porous body, a foamed body, a non-woven fabric body, and the like.

In the present specification, a flame retardant may be referred to as a flame-retardant material, and means a flame retardant material that is included in the flame-retardant polymer layer provided on a surface of the negative electrode active material layer, which ensures flame retardancy by blocking a heat transfer path and suppressing generation of decomposition gas.

In the present specification, combustion means an exothermic reaction in which a substance rapidly combines with oxygen while producing heat or flame. In particular, the combustion may mean generating heat at a high temperature of 150°C or higher, generating heat or flame due to ignition caused by vaporization of an electrolyte, and rapidly reacting with oxygen flowing in from the outside.

In the present specification, char refers to a material that forms a thermally stable layer through a condensation reaction such as dehydration of a flame retardant or a flame retardant composition including a polymer due to combustion, and can play a role in suppressing combustion by blocking contact with external substances (particularly, oxygen).

In an exemplary embodiment of the present specification, a content of the flame retardant may be adjusted depending on a composition of the negative electrode active material, a loading amount of the negative electrode active material, and the like, but when the flame-retardant polymer layer is assumed to be 5 um, a percentage of the flame retardant relative to a total amount of the negative electrode active material may be about 1% or more and 10% or less.

In an exemplary embodiment of the present specification, the flame retardant may include a phosphorus-based flame retardant.

In the present specification, the phosphorus-based flame retardant may refer to a material including a phosphoric acid ester-based compound.

In an exemplary embodiment of the present specification, the phosphorus-based flame retardant may include one or more selected from the group consisting of polyphosphate, phosphonate, phosphinate, phosphine oxide, and phosphazene, but no such limitation is intended as long as the compound corresponds to a phosphorus-based flame retardant, such as a phosphoric acid ester-based compound.

As necessary, the phosphorus-based flame retardant may refer to a single material or a mixed material of two or more combined materials.

According to the exemplary embodiment, the phosphorus-based flame retardant easily forms a char film at a high temperature of 150°C or higher.

In an exemplary embodiment of the present specification, the flame-retardant polymer layer may further include a flame-retardant resin.

In an exemplary embodiment of the present specification, the flame-retardant resin may include an oxygen bond and an aromatic group in a main chain.

In an exemplary embodiment of the present specification, the flame-retardant resin may be one or more selected from the group consisting of a polycarbonate resin, a polyphenyl ether resin, and a phenol resin, but is not particularly limited as long as it is a flame-retardant resin including an oxygen bond and an aromatic group in the main chain.

As necessary, the flame-retardant resin may refer to a single material or a mixed material of two or more combined materials.

In the present specification, the flame-retardant resin may be blended with the phosphorus-based flame retardant.

According to the exemplary embodiment, the flame-retardant resin is used together with the phosphorus-based flame retardant to further secure flame retardancy, thereby facilitating char formation during high-temperature combustion.

In an exemplary embodiment of the present specification, a weight ratio of the flame retardant and the flame-retardant resin is not particularly limited, but the flame retardant and the flame-retardant resin may be blended at a weight ratio of, for example, 1:0.1 to 1:2.

In an exemplary embodiment of the present specification, the flame-retardant polymer layer may further include a binder resin.

In the present specification, for the binder resin, any material known in the art may be used as long as it does not depart from the scope of the present invention, and may include, for example, polyacrylamide.

In an exemplary embodiment of the present specification, a thickness of the flame-retardant polymer layer may be 2 um or greater and 30 um or less.

The unit 'um' refers to $\mu$m.

In an exemplary embodiment of the present specification, the negative electrode active material layer may include at least one of a silicon-based active material and a carbon-based active material.

In an exemplary embodiment of the present specification, the negative electrode active material layer may include a carbon-based active material.

The carbon-based active material can prevent expansion caused by repeated charging and discharging in the negative electrode or lithium secondary battery of the present invention, thereby contributing to excellent cycle characteristics or improved battery life performance.

In an exemplary embodiment of the present specification, the negative electrode active material layer may include a silicon-based active material.

In general, silicon-based active materials are known to have a capacity that is 10 times or higher than that of carbon-based active materials. Accordingly, when a silicon-based active material is applied to a negative electrode, an electrode with a high level of energy density can be implemented even with a thin thickness.

In an exemplary embodiment of the present specification, the silicon-based active material may include one or more selected from the group consisting of $SiO_x$ (x=0), $SiO_x$ (0 < x < 2), a Si/C composite, and a Si alloy.

Note that $SiO_2$ may not react with lithium ions and thus not store lithium, thus x is preferably within the above range. The silicon-based active material may be Si or a Si/C composite composed of a composite of Si and C.

As necessary, the silicon-based active material may refer to a single material or a mixed material of two or more combined materials.

In an exemplary embodiment of the present specification, there is provided a negative electrode composition in which the silicon-based active material includes one or more selected from the group consisting of $SiO_x$ (x=0) and $SiO_x$ (0 < x < 2), and the $SiO_x$ (x=0) is included in an amount of 70 parts by weight or more based on 100 parts by weight of the silicon-based active material.

In an exemplary embodiment of the present specification, the silicon-based active material may include the $SiO_x$ (x=0) in an amount of 70 parts by weight or more, preferably 80 parts by weight or more, and more preferably 90 parts by weight or more and 100 parts by weight or less, preferably 99 parts by weight or less, and more preferably 95 parts by weight or less based on 100 parts by weight of the silicon-based active material.

The silicon-based active material according to the present specification includes the $SiO_x$ (x=0) in an amount of 70 parts by weight or more based on 100 parts by weight of the silicon-based active material, and compared to silicon-based active materials that mainly use $SiO_x$ (0 < x < 2) series compounds, the theoretical capacity of the silicon-based active material in the present specification can be achieved at a much higher level.

In an exemplary embodiment of the present specification, pure silicon (Si) may be used as the silicon-based active material. The use of pure silicon (Si) as the silicon-based active material may mean that, based on 100 parts by weight of the total silicon-based active material as described above, pure Si particles ($SiO_x$ (x=0)) not bonded to other particles or elements are included within the above range.

In an exemplary embodiment of the present specification, the negative electrode active material layer may further include a conductive material and a binder.

In the present specification, the conductive material and binder included in the negative electrode active material layer may be referred to as a negative electrode conductive material and a negative electrode binder, respectively.

The negative electrode conductive material is used to impart conductivity to the electrode, and can be used without particular limitation as long as it has electronic conductivity without causing a chemical change in a battery. However, the negative electrode conductive material is applied to the negative electrode and has a completely separate configuration from a positive electrode conductive material that is applied to the positive electrode. That is, the negative electrode conductive material serves to support a contact point between silicon-based active materials, which undergo a large volume expansion of the electrode due to charging and discharging, whereas the positive electrode conductive material serves to impart partial conductivity while playing a buffer role as a cushioning role when rolled, so the configurations and roles of the negative electrode conductive material and the positive electrode conductive material are different from each other.

Specific examples of the negative electrode conductive material may include one or more selected from the group consisting of a point-like conductive material, a planar conductive material, and a linear conductive material.

Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black and/or artificial graphite in terms of implementing high conductivity and excellent dispersibility.

The planar conductive material may improve conductivity by increasing planar contact between silicon particles in the negative electrode, and at the same time, suppress disconnection of conductive paths due to volume expansion. The planar conductive material may be expressed as a plate-like conductive material or a bulk-type conductive material. Examples of the planar conductive material may include at least one selected from the group consisting of plate-like graphite, graphene, graphene oxide, and graphite flakes and may be preferably plate-like graphite.

The linear conductive material may be carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet in the shape of a cylinder with a nanoscale diameter and has an $sp^2$ bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present specification, there is provided the negative electrode composition in which the negative electrode conductive material is included in an amount of 0.1 part by weight or more and 40 parts by weight or less based on 100 parts by weight of the negative electrode composition.

In another exemplary embodiment, the negative electrode conductive material may be included in an amount of 0.1 part by weight or more and 40 parts by weight or less, preferably 0.2 part by weight or more and 30 parts by weight or less, more preferably 0.4 part by weight or more and 25 parts by weight or less, and most preferably 0.4 part by weight or more and 10 parts by weight or less based on 100 parts by weight of the negative electrode composition.

The negative electrode binder serves to improve the adhesion between negative electrode active material particles and the adhesive strength between the negative electrode active material and the negative electrode current collector and may be classified into an aqueous binder and a non-aqueous binder (organic binder) depending on its solubility in an aqueous solvent such as water. Specific examples of the negative electrode binder may include a carboxymethyl cellulose (CMC)-based binder, a styrene butadiene rubber (SBR)-based binder, a polyacrylic acid (PAA)-based binder, a polyacrylamide (PAM)-based binder, a polyacrylonitrile (PAN)-based binder, polyvinyl alcohol (PVA), polyacrylic acid (PAA), polyethylene glycol (PEG), various copolymers derived therefrom, or a mixture of two or more of these.

In an exemplary embodiment of the present specification, there is provided the negative electrode composition in which a weight average molecular weight of the negative electrode binder is 100,000 g/mol or greater and 1,000,000 g/mol or less.

In the present specification, the weight average molecular weight (Mw) and the number average molecular weight (Mn) are polystyrene-converted molecular weights measured by gel permeation chromatography (GPC) using, as standard materials, monodisperse polystyrene polymers (standard samples) of various degrees of polymerization commercially available for molecular weight measurement. In the present specification, the molecular weight refers to a weight average molecular weight unless particularly described otherwise.

When the weight average molecular weight falls within the above range, the mechanical strength is excellent, and the interaction between molecules is high, resulting in excellent electrode binding force. In addition, when the above range is satisfied, the viscosity of the binder can be set within an appropriate range, leading to excellent coatability of an electrode when a negative electrode is manufactured using the same.

In an exemplary embodiment of the present specification, there is provided the negative electrode composition in which the negative electrode binder is included in an amount of 1 part by weight or more and 20 parts by weight or less based on 100 parts by weight of the negative electrode composition.

In an exemplary embodiment of the present specification, the negative electrode binder may be included in an amount of 20 parts by weight or less, preferably 15 parts by weight or less and 1 part by weight or more, 5 parts by weight or more, or 10 parts by weight or more based on 100 parts by weight of the negative electrode composition.

As described above, when including a negative electrode active material, a negative electrode conductive material, and a negative electrode binder, it may be referred to as a negative electrode composition.

In some cases, a solvent may be added to the negative electrode composition, which may be referred to as a negative electrode slurry. The solvent used herein may be referred to as a solvent for negative electrode slurry formation.

The solvent for negative electrode slurry formation may be, but is not limited to, N-methyl-2-pyrrolidone (NMP), water, or the like.

In the present specification, the negative electrode refers to an electrode that has undergone a series of electrode processes, including a coating step of applying a negative electrode slurry to at least one surface of a negative electrode current collector, a pressing step of pressing the current collector to a certain thickness by roll pressing, and a slitting step of cutting the pressed current collector to fit the electrode specifications.

In an exemplary embodiment of the present specification, the negative electrode can form a negative electrode for a lithium secondary battery by coating a negative electrode slurry including the negative electrode composition to one surface or both surfaces of a current collector.

In an exemplary embodiment of the present specification, a solid content of the negative electrode slurry may fall within a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode composition included in the negative electrode slurry, and may refer to a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

For other details regarding the negative electrode, information known in the art is applied.

<Lithium Secondary Battery>

According to an exemplary embodiment of the present specification, there is provided a lithium secondary battery including, in addition to the above-described negative electrode, a positive electrode, a separator interposed between the negative electrode and the positive electrode, and an electrolyte.

In the present specification, the positive electrode may include a positive electrode current collector and a positive electrode active material layer including a positive electrode active material on at least one surface of the positive electrode current collector.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 $\mu$m to 500 $\mu$m, and fine irregularities may be formed on a surface of the positive electrode current collector layer to increase the adhesive strength of the positive electrode active material. For example, the positive electrode current collector may be used in various forms, such as a film, a sheet, a foil, a net, a porous body, a foamed body, a non-woven fabric body, and the like.

In an exemplary embodiment of the present specification, a thickness of the positive electrode current collector layer may be 1 $\mu$m or greater and 100 $\mu$m or less, and a thickness of the positive electrode active material layer may be 20 $\mu$m or greater and 500 $\mu$m or less. However, the thickness may vary depending on the type and purpose of the negative electrode used and is not limited thereto.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$, and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above. When the positive electrode active material, the positive electrode conductive material, and the positive electrode binder are included, it may be referred to as a positive electrode composition, and when the positive electrode composition further includes a solvent for formation of a positive electrode slurry, it can be referred to as a positive electrode slurry.

The positive electrode conductive material is used to impart conductivity to the electrode, and can be used without particular limitation as long as it has electronic conductivity without causing a chemical change in a battery to be configured. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

The positive electrode binder serves to improve the adhesion between positive electrode active material particles and the adhesive strength between the positive electrode active material and the positive electrode current collector. Specific examples of the positive electrode binder include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers derived therefrom, or a mixture of two or more of these.

The solvent, when referring to a solvent for formation of a positive electrode slurry, may include, but is not limited to, N-methyl-2-pyrrolidone (NMP), water, or the like.

In the present specification, the positive electrode refers to an electrode that has undergone a series of electrode processes, including a coating step of applying a positive electrode slurry to at least one surface of a positive electrode current collector, a pressing step of pressing the current collector to a certain thickness by roll pressing, and a slitting step of cutting the pressed current collector to fit the electrode specifications.

For other details regarding the positive electrode, information known in the art is applied.

In the present specification, the electrolyte refers to a material that can be used in the manufacture of a lithium secondary battery, and may include, but is not limited to, an organic liquid electrolyte, an inorganic liquid electrolyte, a solid polymer electrolyte, a gel-type polymer electrolyte, a solid inorganic electrolyte, a molten inorganic electrolyte, and the like.

Specifically, the electrolyte may include a non-aqueous organic solvent and a metal salt.

Specific examples of the non-aqueous organic solvent include aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, and ethyl propionate.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

In the present specification, the separator separates the negative electrode and the positive electrode and provides a migration passage for lithium ions, and can be used without particular limitation as long as the separator is typically used as a separator in a lithium secondary battery. In particular, a separator having high moisture-retention ability for an electrolyte solution as well as a low resistance to the migration of electrolyte solution ions is preferable. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

In the present specification, a lithium secondary battery may be a concept including a battery can accommodating an electrode assembly including a positive electrode, a negative electrode, and a separator, and an electrolyte.

### <Battery Pack>

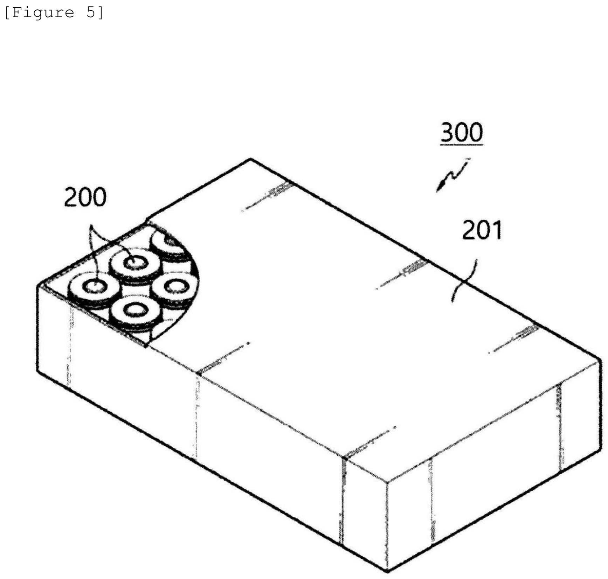

A battery pack of the present specification refers to FIG. 5.

An exemplary embodiment of the present specification provides a battery module and/or a battery pack 300 including the lithium secondary battery 200 as a unit cell.

Since the battery module and/or battery pack includes the lithium secondary battery 200, the contents of the above-described lithium secondary battery can be applied as is.

In the present specification, the battery pack 300 may have a structure in which the lithium secondary battery 200 is included in a pack housing 201.

According to FIG. 5, the lithium secondary battery 200 may be replaced with a coin type, a pouch type, a square type, or the like, as needed, in addition to the shown cylindrical type.

In some cases, the battery pack of the present specification may include one or more battery module units.

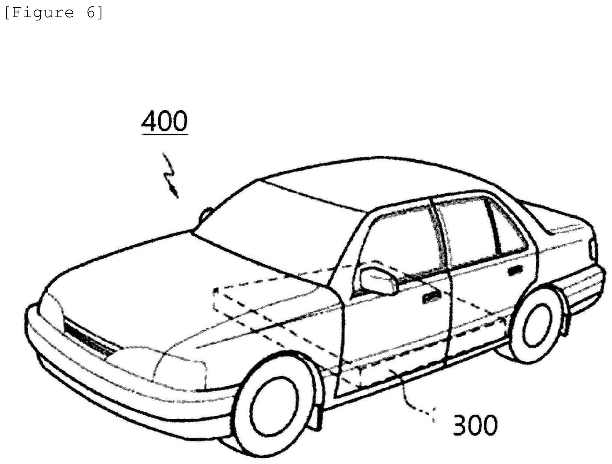

According to FIG. 6, the battery pack 300 can be used as a power source for a medium- to large-sized device selected from the group consisting of a moving means 400 such as an electric vehicle, a hybrid electric vehicle, a plug-in hybrid electric vehicle, and an electric power storage system (EES), as needed.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### Preparation Example. Preparation of Negative Electrode

### Preparation Example 1.

A negative electrode slurry was prepared by adding a negative electrode active material, a first conductive material, a second conductive material, and polyacrylamide as a binder to distilled water as a solvent for formation of a negative electrode slurry at a weight ratio of 90:4.6:0.4:5 (solid concentration 28 wt%).

Specifically, the first conductive material was plate-like graphite (specific surface area: 17 $m^2$/g, average particle diameter (D50): 3.5 $\mu$m), and the second conductive material was SWCNTs (single-walled carbon nanotubes).

As a specific mixing method, the first conductive material, the binder, and water were dispersed at 2,500 rpm for 30 minutes by using a homogeneous mixer, the second conductive material was added and dispersed for 10 minutes, and then a silicon-based active material as the negative electrode active material was added and dispersed at 2,500 rpm for 30 minutes to prepare a negative electrode slurry.

The negative electrode slurry was coated on one surface of a copper current collector (thickness: 15 $\mu$m) serving as a negative electrode current collector layer with a loading amount of 950 mg/50 $cm^2$, which was then roll-pressed and dried in a vacuum oven at 130°C for 10 hours to form a negative electrode active material layer (thickness: 95 $\mu$m), resulting in preparation of a negative electrode (thickness of negative electrode: 110 $\mu$m, porosity of negative electrode: 30.0%).

A solution was prepared by diluting a flame retardant (polyphosphate), a flame-retardant resin (polycarbonate resin), and a binder (polyacrylamide) at a weight ratio of 1:0.5:1 in distilled water to a concentration of 10 wt%.

The diluted solution was coated on the prepared negative electrode, which was then dried in an oven at 60°C for 10 hours to prepare a negative electrode including a flame-retardant polymer layer (flame-retardant polymer layer thickness: 5um).

**Preparation Example 2.**

A negative electrode was prepared using the same method as in Preparation Example 1, except that the weight ratio of the flame retardant and the flame-retardant resin was changed to 1:0.3.

**Preparation Example 3.**

A negative electrode was prepared using the same method as in Preparation Example 1, except that the weight ratio of the flame retardant and the flame-retardant resin was changed to 1:1.2.

**Preparation Example 4.**

A negative electrode was prepared using the same method as in Preparation Example 1, except that the weight ratio of the flame retardant and the flame-retardant resin was changed to 1:1.5.

**Preparation Example 5**

A negative electrode was prepared using the same method as in Preparation Example 1, except that the thickness of the flame-retardant polymer layer was changed to 10 $\mu$m.

**Preparation Example 6.**

A negative electrode was prepared using the same method as in Preparation Example 1, except that the thickness of the flame-retardant polymer layer was changed to 20 $\mu$m.

**Comparative Preparation Example 1.**

A negative electrode was prepared using the same manner as in Preparation Example 1, except that the flame-retardant polymer layer was not included.

**Comparative Preparation Example 2.**

A negative electrode was prepared using the same method as in Preparation Example 1, except that a styrene-based flame-retardant resin was used.

**Comparative Preparation Example 3.**

A negative electrode was prepared using the same method as in Preparation Example 1, except that the flame retardant was not included.

**Examples <Preparation of Lithium Secondary Battery>**

<Examples 1 to 6 and Comparative Examples 1 to 3>

A positive electrode slurry (solid concentration: 78 wt%) was prepared by adding $LiNi_{0.6}Co_{0.2}Mn_{0.2}O_2$ (average particle diameter (D50): 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated onto one surface of an aluminum current collector (thickness: 12 $\mu$m)

serving as a positive electrode current collector with a loading amount of 537 mg/25 cm$^2$, which was then roll-pressed and dried in a vacuum oven at 130°C for 10 hours to form a positive electrode active material layer (thickness: 65 $\mu$m), resulting in preparation of a positive electrode (thickness of positive electrode: 77 $\mu$m, porosity: 26%).

A polyethylene separator was interposed between the positive electrode and the negative electrode of Preparation Examples 1 to 6 and Comparative Preparation Examples 1 to 3, and an electrolyte, which was prepared by adding vinylene carbonate to an organic solvent obtained by mixing fluoroethylene carbonate (FEC) and diethyl carbonate (DEC) in a volume ratio of 10:90 by 3 wt% based on the total weight of the electrolyte and adding 1 M LiPF$_6$ as a lithium salt, was injected thereto, thereby preparing a lithium secondary battery.

### <Experimental Example>

### Experimental Example 1: Thermal Runaway Time Evaluation (Ignition Duration Evaluation)

The ignition duration was evaluated for the lithium secondary batteries prepared in Examples 1 to 6 and Comparative Examples 1 to 3. The time taken for ignition and self-extinguishment on the negative electrode surface was measured, and the evaluation results are shown in Table 1 below.

[Table 1]

| No. | Composition and weight ratio of flame-retardant polymer layer | Thickness of flame-retardant coating layer | Ignition Duration (sec) |
|---|---|---|---|
| Example 1 | polyphosphate: polycarbonate resin = 1:0.5 | 5 um | 2.0 |
| Example 2 | polyphosphate: polycarbonate resin = 1:0.3 | 5 um | 3.7 |
| Example 3 | polyphosphate: polycarbonate resin = 1:1.2 | 5 um | 2.8 |
| Example 4 | polyphosphate: polycarbonate resin = 1:1.5 | 5 um | 3.2 |
| Example 5 | polyphosphate: polycarbonate resin = 1:0.5 | 10 um | 2.0 |
| Example 6 | polyphosphate: polycarbonate resin = 1:0.5 | 20 um | 2.0 |
| Comparative Example 1 | (No coating layer) | (No coating layer) | 5.2 |
| Comparative Example 2 | polyphosphate: styrene resin = 1:0.5 | 5 um | 4.6 |
| Comparative Example 3 | Composed solely of flame-retardant resin, without flame retardant | 5 um | 4.4 |

As can be seen in Table 1, it was confirmed that, when examining the ignition duration of Examples 1 to 6 and Comparative Examples 1 to 3, the ignition duration of the Comparative Example group was inferior to that of the Example group. In Example 1 in which the flame retardant/flame-retardant resin ratio was 1:0.5, the time taken for self-extinguishing was the shortest at 2.0 seconds, and in Examples 2 to 4, the ignition duration was also short, at a maximum of 3.7 seconds. These confirm that the flame-retardant polymer layer suppressed the ignition retention, thereby substantially preventing ignition.

### Experimental Example 2: Life Evaluation

The life of the lithium secondary batteries of Examples 1 to 6 and Comparative Examples 1 to 3 was evaluated by a capacity retention rate using an electrochemical charge/discharge tester.

The lithium secondary battery was subjected to an in-situ cycle test at 4.2-3.0 V 1C/0.5C, and during the test, 0.33C/0.33C charge/discharge (4.2-3.0 V) was performed every 50 cycles to calculate the capacity retention rate according to the following formula.

capacity retention rate (%) = {(discharge capacity at N$^{th}$ cycle)/(discharge capacity at first cycle)} $\times$ 100%

[Table 2]

| No. | Flame retardant/flame-retardant resin ratio | Capacity retention rate (%) after 200 cycles |
|---|---|---|
| Example 1 | 1:0.5 | 90 |
| Example 2 | 1:0.3 | 90 |
| Example 3 | 1:1.2 | 89 |
| Example 4 | 1:1.5 | 88 |
| Example 5 | 1:0.5 (thickness of flame-retardant coating layer: 10 um) | 88 |
| Example 6 | 1:0.5 (thickness of flame-retardant coating layer: 20 um) | 87 |
| Comparative Example 1 | (No coating layer) | 90 |
| Comparative Example 2 | 1:0.5 (flame-retardant resin: styrene-based) | 89 |
| Comparative Example 3 | No flame retardant | 89 |

As can be seen in Table 2, it was confirmed that, when examining the capacity retention rate according to the cycle of Examples 1 to 6 and Comparative Examples 1 to 3, even introducing the flame-retardant polymer layer to the surface of the negative electrode did not significantly affect the life evaluation results.

**Experimental Example 3: Cell Resistance Evaluation**

In the test in Experimental Example 2, the capacity retention rates were measured by charging/discharging (4.2-3.0V) the batteries at 0.33C/0.33C every 50 cycles, and then the resistance increase rates were compared and analyzed by discharging the batteries with a pulse of 2.5C at SOC50 to measure the resistance.
For the evaluation of the resistance increase rate measurement, data at 200 cycles was calculated each, and the results are shown in Table 3 below.

[Table 3]

| No. | Flame retardant/flame-retardant resin ratio | Resistance increase rate (%) after 200 cycles (3.0 to 4.2 V range 1C/0.5C) |
|---|---|---|
| Example 1 | 1:0.5 | 7 |
| Example 2 | 1:0.3 | 7 |
| Example 3 | 1:1.2 | 8 |
| Example 4 | 1:1.5 | 8 |
| Example 5 | 1:0.5 (thickness of flame-retardant coating layer: 10 um) | 8 |
| Example 6 | 1:0.5 (thickness of flame-retardant coating layer: 20 um) | 9 |
| Comparative Example 1 | (No coating layer) | 6 |
| Comparative Example 2 | 1:0.5 (flame-retardant resin: styrene-based) | 7 |
| Comparative Example 3 | No flame retardant | 8 |

As can be seen in Table 3, it was confirmed that, when examining the resistance increase rate according to the cycle of Examples 1 to 6 and Comparative Examples 1 to 3, the resistance increase rates of Examples 1 to 6 after 200 cycles did not significantly increase compared to Comparative Examples 1 and 3 in which no flame-retardant polymer coating layer was provided or no flame retardant was provided. This confirms that even introducing a flame-retardant polymer layer as in Examples 1 to 6 does not affect the cell operation.

**Claims**

1. A negative electrode comprising:

a negative electrode current collector;
a negative electrode active material layer provided on the negative electrode current collector; and
a flame-retardant polymer layer provided on the negative electrode active material layer,
wherein the flame-retardant polymer layer comprises a flame retardant that is converted to char when combusted at a temperature of 150°C or higher.

2. The negative electrode of claim 1, wherein the flame retardant comprises a phosphorus-based flame retardant.

3. The negative electrode of claim 2, wherein the phosphorus-based flame retardant comprises one or more selected from the group consisting of polyphosphate, phosphonate, phosphinate, phosphine oxide, and phosphazene.

4. The negative electrode of claim 1, wherein the flame-retardant polymer layer further comprises a flame-retardant resin.

5. The negative electrode of claim 4, wherein the flame-retardant resin is one or more selected from the group consisting of a polycarbonate resin, a polyphenyl ether resin, and a phenol resin.

6. The negative electrode of claim 1, wherein a thickness of the flame-retardant polymer layer is 2 um or greater and 30 um or less.

7. The negative electrode of claim 1, wherein the negative electrode active material layer comprises at least one of a silicon-based active material and a carbon-based active material.

8. The negative electrode of claim 7, wherein the silicon-based active material comprises one or more selected from the group consisting of $SiO_x$ (x=0), $SiO_x$ (0 < x < 2), a Si/C composite, and a Si alloy.

9. The negative electrode of claim 7, wherein the negative electrode active material layer further comprises a conductive material and a binder.

10. A lithium secondary battery comprising:

the negative electrode of any one of claims 1 to 9;
a positive electrode;
a separator interposed between the positive electrode and the negative electrode; and
an electrolyte.

11. A battery pack comprising the lithium secondary battery of claim 10 as a unit cell.

[Figure 1]

[Figure 2]

[Figure 3]

[Figure 4]

(a)

(b)

[Figure 5]

[Figure 6]

## INTERNATIONAL SEARCH REPORT

| International application No. |
|---|
| **PCT/KR2024/015362** |

### A. CLASSIFICATION OF SUBJECT MATTER

**H01M 4/134**(2010.01)i; **H01M 10/42**(2006.01)i; **H01M 4/38**(2006.01)i; **H01M 4/48**(2010.01)i; **H01M 4/587**(2010.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/134(2010.01); H01M 10/42(2006.01); H01M 10/52(2006.01); H01M 4/02(2006.01); H01M 50/229(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 리튬 이차 전지(lithium secondary battery), 난연성 고분자층(flame-retardant polymer layer), 폴리포스페이트(polyphosphate), 폴리카보네이트 수지(polycarbonate resin), 전지 팩(battery pack)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0055809 A (SK ON CO., LTD.) 26 April 2023 (2023-04-26)<br>See paragraphs [0003], [0033], [0034], [0037], [0042], [0043], [0051], [0057], [0058], [0070], [0071], [0087] and [0088]. | 1-11 |
| Y | KR 10-2481189 B1 (DAEJIN ADVANCED MATERIALS INC.) 26 December 2022 (2022-12-26)<br>See paragraphs [0011], [0056], [0058], [0062] and [0095]. | 1-11 |
| A | KR 10-2017-0091425 A (LG CHEM, LTD.) 09 August 2017 (2017-08-09)<br>See claims 1-15. | 1-11 |
| A | WO 2022-170363 A1 (GLOBAL GRAPHENE GROUP, INC.) 11 August 2022 (2022-08-11)<br>See abstract; and claims 1 and 4. | 1-11 |
| A | KR 10-2023-0068765 A (ELECTRONICS AND TELECOMMUNICATIONS RESEARCH INSTITUTE) 18 May 2023 (2023-05-18)<br>See abstract; and claim 1. | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 February 2025** | **10 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015362**

| Patent document cited in search report | | | Publication date (day/month/year) | Patent family member(s) | | | Publication date (day/month/year) |
|---|---|---|---|---|---|---|---|
| KR | 10-2023-0055809 | A | 26 April 2023 | None | | | |
| KR | 10-2481189 | B1 | 26 December 2022 | None | | | |
| KR | 10-2017-0091425 | A | 09 August 2017 | KR | 10-2142627 | B1 | 07 August 2020 |
| WO | 2022-170363 | A1 | 11 August 2022 | CN | 117121220 | A | 24 November 2023 |
| | | | | KR | 10-2023-0155455 | A | 10 November 2023 |
| | | | | US | 2022-0255080 | A1 | 11 August 2022 |
| KR | 10-2023-0068765 | A | 18 May 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230140890